# EUROPEAN PATENT APPLICATION

(11) **EP 2 525 528 A1**
(43) Date of publication of application: **21.11.2012**
(21) Application number: 11305591.7
(22) Date of filing: 17.05.2011
(51) Int. Cl.: H04L 12/24

(54) **Method for providing a service in a communication network**

(71) Applicant: Alcatel Lucent, 75007 Paris (FR)
(72) Inventor: Donadio, Pasquale, 80129 Napoli (IT); Paparella, Andrea, 21052 Busto Arsizio (IT); Riglietti, Roberto, 20871 Vimercate (IT)
(74) Representative: Colombo, Stefano Paolo

(57) **Abstract**

It is disclosed a method for providing a service to a user of a communication network. The method comprises, at a service manager cooperating with at least one apparatus of the communication network: receiving an input from a business plane or a service plane or a control plane of the communication network, the input comprising a requirement which the service shall fulfill; providing the service as an aggregation of a first number of components, each component comprising a software code portion suitable for performing an elementary task of an overall task of the service. Each component is automatically selected from a respective predefined set comprising a second number of component variants, so as to configure the service according to a configuration which fulfills the input requirement.

## Description

### Technical Field

The present invention relates to the field of communication networks. In particular, the present invention relates to a method for providing a service in a communication network and to an apparatus for a communication network configured to implement such a method.

### Background Art

As known, a communication network comprises a plurality of network elements configured to exchange user data.

The exchange of user data requires the implementation of various functions and services in the communication network, which may be grouped basically in five groups, which are also termed "planes": data plane, control plane, management plane, service plane and business plane.

The data plane comprises the functions relating to the physical transport of the data, for instance the framing function and the switching function. Such functions are typically performed by the network elements.

The control plane comprises the functions of signaling, routing and resource discovery. The functions of the control plane are essential operations to introduce automation on high level network functions such as: connection establishment (i.e., path computation, resource availability verification and connection signaling set-up and tear-down), reconfiguration of signaled connections and connection restoration in case of network faults. Such functions are typically performed by the network elements.

The management plane comprises management functions of such as alarm reporting, systems configuration and connection provisioning for data and control planes. The complexity of the management plane depends strongly on the availability of a control plane. The management functions may be performed either by suitable management apparatuses (namely, network element managers and network managers) cooperating with the network elements or by the network elements themselves.

The service plane comprises the applications or services provided by the network operator to users (e.g. telephone and/or data service providers). The service plane relies on the functions of the control plane and/or management plane for suitably operating the network elements so that they implement the services as configured by the network operator. Exemplary services, which may be offered to users by the network operator at the service plane, are: failure management services, data security services, cached connection services, application servers for lP Multimedia Subsystems (IMS), Voice Over lP, IPTV, Video On Demand and Advanced Security, feature servers, directory servers, multimedia messaging services (MMS), short message services (SMS), gaming, web hosting and caching, parlay gateway, Intelligent Network services and Advanced Intelligent Network services and so on.

The business plane (also termed "application plane") provides higher-level functions relying on the functions of the service plane. The business plane basically is an abstraction which groups information relating to the business models applied by the network operator to the offered services and information relating to the network requirements. The business plane for instance comprises the rules based on which a business model may be implemented (e.g. a business model based on hiring of a link, a business model based on payment of the daily consumed traffic, etc.)

Typically, at the service plane, a network operator may provide a service with different service levels, each service level corresponding to a different performance and, generally, to a different cost of the service. For instance, in case of a failure management service, different failure management mechanisms are known, such as for instance:
- 1 +1 protection: the protection path is pre-calculated and protected data are permanently transmitted simultaneously on working path and protection path;
- 1:1 protection: the protection path is pre-calculated and protected data are switched from working path to protection path only if the working path becomes failed;
- restoration: the protection path is calculated only upon failure;
- DSP (Demand-wise Shared Protection): the protection path is pre-calculated and has a bandwidth narrower than the working path;
- FTPP (Fault Tolerant Probability based Protection): working paths are calculated based on a minimum failure probability criterion; and
- ESP (Energy Saving based Protection): working and protection paths are calculated so as to minimize the power consumption of the communication network.

Each one of the above mechanisms provides a given failure tolerance level at a given cost. For instance, 1+1 protection provides the maximum failure tolerance level, but it is the most costly of the above cited mechanisms, because it requires to permanently transmit the protected data simultaneously on two non-overlapping paths having equal bandwidths. Hence, if the communication network supports two or more of the above failure management mechanisms, the network operator may provide the failure management service with different failure tolerance levels.

Typically, a user and a network operator stipulate a SLA (Service Level Agreement), which basically is a contract defining - for each service provided by the network operator - a respective service level that the network operator shall guarantee to the user. For instance, a SLA may define the failure tolerance level that the network operator shall guarantee. In case two or more available failure management mechanisms guarantee a same failure tolerance level, the network operator may decide which one of such mechanisms will be implemented for providing the service to the user.

### Summary of the invention

Currently, when a user requests to change (namely, increase or decrease) the service level agreed in the SLA, the network operator shall check whether the service as currently configured is capable of guaranteeing the new service level. In the negative, the network operator shall manually reconfigure the service so that it guarantees the new service level. Then, the network operator shall use the functions of the management plane and/or the control plane for deploying the reconfigured service in the communication network, namely for acting upon the network elements of the communication network so that they implement the service as reconfigured.

For instance, with reference to the above example of a failure management service, a user may initially agree on a lower failure tolerance level which the network operator may guarantee with a failure management service based e.g. on the above mentioned DSP mechanism.

If the user requests a higher failure tolerance level, the network operator shall firstly check whether the DSP mechanism guarantees the new failure tolerance level. In the negative, the network operator shall determine the available failure management mechanisms supported by the network elements of the communication network and choose one of such failure management mechanisms, which guarantees the higher failure tolerance level. Then, the network operator shall manually operate upon the network elements of the communication network (using the functions of the management plane and/or the control plane) so that the relevant network elements switch to the chosen failure management mechanism.

The Applicant has perceived that this operation may be very complex and long for the network operator. The operation becomes particularly burdensome in case several network elements are involved.

In view of the above, the Applicant has faced the problem of providing a method for providing a service in a communication network which overcomes the aforesaid drawbacks, i.e. which allows configuring the service according to the user's requests in simple and fast way, with a minimum manual intervention by the network operator upon the network elements of the communication network.

In the present description and in the claims, the term "service" will indicate a service of the service plane offered by a network operator to a telephone and/or data service provider who uses the communication network for providing its end users with telephone and/or data services. Exemplary services of the service plane are: failure management services, data security services, cached connection services, and so on.

Further, in the present description and in the claims, the term "apparatus for/of a communication network" will indicate a network element (a switch, a router, etc.) of the communication network, a management apparatus (a network element manager, a network manager, etc.) cooperating with one or more network elements of the communication network and suitable for performing management operations upon them, or a computer connected to a network element or to a management apparatus.

According to a first aspect, the present invention provides a method for providing a service to a user of a communication network, the method comprising, at a service manager cooperating with at least one apparatus of the communication network:
- receiving an input from at least one of a business plane, a service plane and a control plane of the communication network, the input comprising at least one requirement which the service shall fulfill; and
- providing the service as an aggregation of a first number of components, each component comprising a software code portion suitable for performing an elementary task of an overall task of the service,
wherein providing the service comprises selecting each component from a respective predefined set comprising a second number of component variants, so as to configure the service according to a configuration which fulfils the requirement.

Preferably, the component variants of the respective predefined set from which the each component is selected are listed in a variant array stored in a service database cooperating with the service manager.

Preferably, the variant array comprises a third number of first elements, the third number being equal to the second number, each first element comprising an information indicative of a respective component variant.

Profitably, the variant array is automatically updated by adding a further first element when a further component variant of the component becomes available in the communication network.

Preferably, providing the service comprises providing a service array describing the configuration, the service array comprising a fourth number of second elements, the fourth number being equal to the first number, each second element of the service array comprising an index pointing to one of the first elements in the variant array, thereby indicating the variant component selected for the component.

Profitably, the method comprises storing the service array in the service database cooperating with the service manager.

Preferably, the method further comprises deploying the service configured according to the configuration in the communication network by identifying at least one network element of the communication network which shall execute the service and by using at least one function of the control plane and/or the management plane for operating the at least one network element so that it executes the service.

According to an advantageous embodiment, the method further comprises receiving a further input from the business plane and/or from the service plane and/or from the control plane of the communication network, the further input comprising at least one further requirement which the service shall fulfill and, in response to the further input:
- checking whether the service configured according to the configuration fulfils the further requirement and, in the negative,
- modifying the current configuration into a modified configuration which fulfils the further requirement; and
- deploying the service configured according to the modified configuration in the communication network.

Preferably, modifying the current configuration comprises one or more of the following operations:
- adding a further component to the service;
- removing at least one of the components from the service; and
- changing component variant for at least one of the components.

Preferably, checking whether the service configured according to the configuration fulfils the further requirement comprises retrieving the service array from the service database and reading values of the second elements of the retrieved service array; and modifying the current configuration comprises changing value of at least one of the second elements of the retrieved service array.

Optionally, the service manager is executed in a centralized way by a management apparatus of the communication network.

Alternatively, the service manager is executed in a distributed way by a cluster comprising at least one management apparatus and/or at least one network element of the communication network.

According to a second aspect, the present invention provides an apparatus for a communication network, said apparatus being configured to perform the method as set forth above.

According to a third aspect, the present invention provides a communication network configured to perform the method as set forth above.

According to a fourth aspect, the present invention provides a computer program product comprising computer executable instructions for performing, when the computer program product is run on an apparatus of a communication network, the method as set forth above.

### Brief description of the drawings

Embodiments of the invention will be better understood by reading the following detailed description, given by way of example and not of limitation, to be read with reference to the accompanying drawings, wherein:
- Figure 1 schematically shows a communication network;
- Figure 2 is a schematic representation of the architecture of the communication network of Figure 1, according to an embodiment of the present invention;
- Figure 3 is a schematic representation of a service array;
- Figure 4 is a block diagram of a service manager, according to a preferred embodiment of the present invention; and
- Figure 5 is a flow chart of the operation of the service manager.

### Detailed description of preferred embodiments of the invention

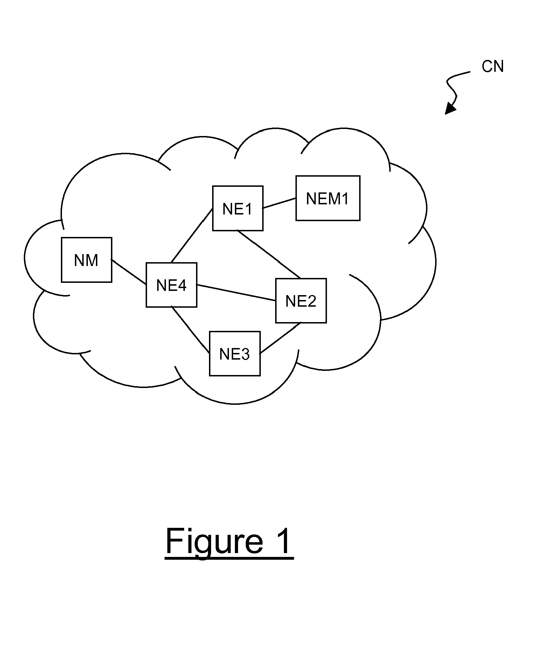

Figure 1 schematically shows a communication network CN suitable for implementing the method according to a preferred embodiment of the present invention.

The communication network CN comprises a number of network apparatuses.

In particular, the communication network CN comprises a number of network elements, which are interconnected by means of links according to any known network topology (for instance, mesh topology, tree topology, ring topology, etc.). In Figure 1, for simplicity, only four network elements NE1, NE2, NE3, NE4 connected according to a partial mesh topology are shown. The network elements of the communication network CN may be either of a same type (e.g. they may be all Ethernet switches, lP routers, etc.) or they may be of different types.

Further, the communication network CN may optionally comprise one or more management apparatuses (for instance network element managers and/or network managers) cooperating with the network elements and suitable for performing management functions on the network elements.

In Figure 1, for simplicity, only two management apparatuses are shown: a network element manager NEM1 and a network manager NM. The network element manager NEM1 is suitable for performing management functions upon the network element NE1. The network element managers of the network elements NE2, NE3, NE4 are not shown in Figure 1 for not overloading the Figure. The network element manager NEM1 may be implemented as a stand-alone apparatus connected to the network element NE1 by means of a link, as shown in Figure 1. Alternatively, the network element manager NEM1 may be integrated within the network element NE1 itself. The network manager NM is suitable for performing management operations upon the ensemble of the network elements of the communication network CN. The network manager NM is logically connected to all the network elements of the network, so that it is able to exchange management information with all the network elements to be managed. To this purpose, the network manager NM is preferably connected by means of a link to one of the network elements to be managed, through which it exchanges management information with the other network elements to be managed. By way of non limiting example, in Figure 1 the network element NM is connected to the network element NE4.

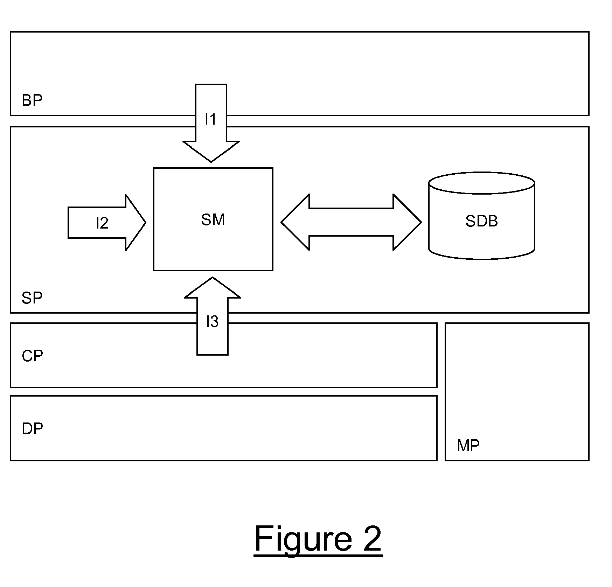

The communication network CN preferably is suitable for implementing various functions and services, which may be grouped basically in five groups or planes which are shown in Figure 2, namely: a data plane DP, a control plane CP, a management plane MP, a service plane SP and a business plane BP.

The data plane DP, the control plane CP, the management plane MP and the business plane BP basically comprise the known functions described above. Hence, a detailed description of the functions of such planes will not be repeated.

As to the service plane SP, according to preferred embodiments of the present invention, the communication network CN is preferably provided with a service database SDB and a service manager SM suitable for cooperating with the service database SDB for automatically providing services at the service plane SP to the users of the communication network CN.

According to preferred embodiments of the present invention, a service Sn as provided by the service manager SM comprises an aggregation of m components C1, C2, ... Cm, each component being substantially a software code portion suitable for performing a given elementary task needed to carry out the global task of the service Sn.

The service manager SM preferably selects each component C1, C2, ... Cm from a respective, predefined set of k(1), k(2), ... k(m) component variants, each component variant being substantially a different implementation of the component available in the communication network CN. In other words, the variants of a component are software code portions suitable for performing the elementary task of that component in different ways. In particular, the component C1 is selected from a predefined set of k(1) component variants V11, V12, ... V1k(1), the component C2 is selected from a predefined set of k(2) component variants V21, V22, ... V2k(2), ... and the component Cm is selected from a predefined set of k(m) component variants Vm1, Vm2, ... Vmk(m). The number k(1), k(2), ..., k(m) of component variants may be different for each component C1, C2, ... Cm and may be equal to or higher than 1. If it is equal to 1, a single variant of that component is available, i.e. the configurable service Sn may carry out the elementary task of that component in a single way.

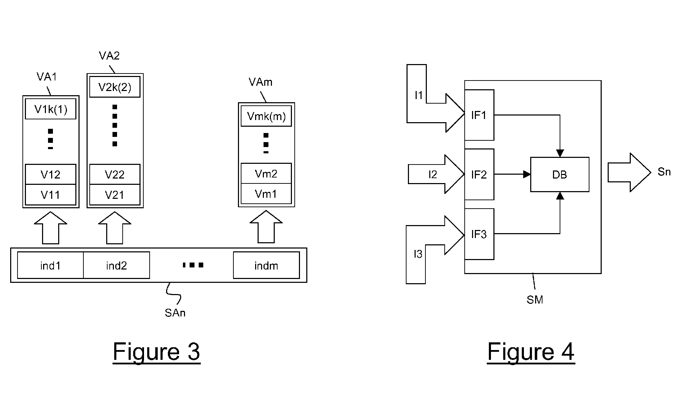

For each component C1, C2, ... Cm, the component variants available at the network apparatuses of the communication network CN are preferably listed in a respective variant array VA1, VA2, ... VAm (shown in Figure 3), which is stored in the service database SDB. The variant arrays VA1, VA2, ... VAm have lengths k(1), k(2), ... k(m), respectively. Each element of each variant array VA1, VA2, ... VAm preferably comprises information indicative of a component variant, e.g. its identifier. The service manager SM preferably monitors the communication network CN for detecting new variant components. When a new variant of a component C1, C2, ... Cm becomes available at any one of the network apparatuses of the communication network CN, the corresponding variant array VA1, VA2, ... VAm is preferably updated in the service database SDB by adding the identifier of the new component variant.

In addition to the variant arrays VA1, VA2, ... VAm, the service data base SDB further stores, for each service Sn deployed in the communication network CN, a respective service array SAn (shown in Figure 3) which describes the configuration of the service Sn, i.e. which describes the selected component variant for each component C1, C2, ... Cm. The service array SAn has length m. Each element of the service array SAn comprises an index ind1, ind2, ... indm. Each index ind1, ind2, ... indm corresponds to a respective component C1, C2, ... Cm and points to an element of the variant array VA1, VA2, ... Vam (as shown in Figure 3), thereby indicating the selected variant component which shall be included in the service Sn.

Hence, the service Sn may be configured according to a number of configurations Conf(j), each configuration Conf(j) of the service Sn being described by a different combination of values of the indexes ind1, ind2, ... indm of the service array SAn. According to some configurations Conf(j), one or more of the components C1, C2, ... Cm may be excluded from the service Sn, such as for instance a component suitable for performing an optional elementary task which is provided only to users requesting a given service level. In case a component is excluded from the service Sn, the corresponding index in the service array SAn preferably has a predefined value (e.g. "null").

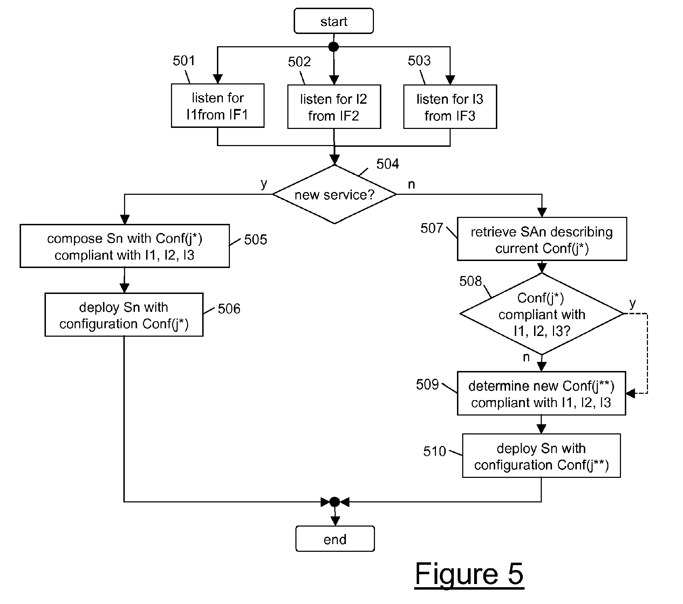

The structure and operation of the service manager SM will be now described in detail, with reference to Figures 4 and 5.

As shown in Figure 4, the service manager SM preferably comprises a business plane interface IF1, a service plane interface lF2, a control plane interface lF3 and a decision block DB. The service manager SM may be executed either in a centralized way or in a distributed way. In case of centralized execution, the service manager SM may be executed either by a dedicated apparatus or by a management apparatus of the communication network CN (e.g. a network element manager or the network manager NM). In case of decentralized execution, the execution of the service manager SM may be shared by a cluster of management apparatuses and/or by network elements of the communication network CN according to a grid computing technique.

The operation of the service manager SM (and, in particular, of the decision block DB) when executed will be now described with reference to Figure 5.

The decision block DB preferably listens for possible first inputs I1 from the business plane BP through the business plane interface IF1 (step 501). An exemplary first input I1 may be for instance a new SLA stipulated between user and network provider or a modification of a SLA already stipulated between user and network provider, e.g. a change of service level requested by the user for a certain service. A further exemplary first input I1 may be an expansion plan for the communication network CN (e.g. addition of network elements). The first inputs I1 are preferably formalized using a predefined format and a predefined language, such as for instance XML (eXtensible Markup Language).

Substantially at the same time, the decision block DB listens for possible second inputs I2 from the service plane SP through the service plane interface lF2 (step 502). The second inputs I2 may comprise information generated by the services deployed in the communication network CN (e.g. measurements or monitoring information).

Substantially at the same time, the decision block DB listens for possible third inputs I3 from the control plane CP through the control plane interface IF3 (step 503). The third inputs I3 may comprise signaling messages generated by the network elements of the communication network CN as a result of the execution of functions at the control plane CP (e.g. failure indications, path recalculation indications, etc.).

Upon reception of a first input I1 and/or a second input I2 and/or a third input I3, the decision block DB preferably determines whether the received input relates to the deployment of a new service Sn or to the modification of an already deployed service Sn (step 504).

For instance, a first input I1 containing a new SLA relating to the provision of a new service Sn with a given service level relates to the deployment of a new service. On the other hand, a first input I1 containing a modification of a SLA already stipulated between user and network provider (e.g. a change of service level requested by the user for a certain service) relates to the modification of an already deployed service Sn.

If the decision block DB determines that the received input relates to the deployment of a new service Sn, the decision block DB preferably composes the service Sn with a configuration Conf(j*) which complies with the received input(s) (step 505) and generates a service array SAn which describes the selected configuration Conf(j*). More than one of the available configurations Conf(j) of the service Sn may comply with the received input(s). For instance, more than one of the available configurations Conf(j) of the service Sn may guarantee a service level specified in a SLA received at the decision block DB from the business plane BP through the business plane interface IF1. In this case, the decision block DB may select the configuration Conf(j*) amongst the configurations C(j) which comply with the received input(s) based on a predetermined criterion, such as for instance maximization of the resource usage efficiency, minimization of the OPEX, etc. Hence, the decision block DB selects the configuration of the service Sn which is most convenient for the network operator. This selection is transparent to the user, who is aware of the guaranteed service level, but is unaware of the service configuration which provides him the requested service level.

After generating the service array SAn describing the selected configuration Conf(j*), at step 505 the decision block DB preferably stores it in the service database SDB.

Then, the decision block DB preferably deploys the service Sn configured according to the selected configuration Conf(j*) described by the service array SAn in the communication network CN (step 506). In particular, step 506 comprises identifying the network apparatus(es) which shall execute the service Sn and instructing such network apparatus(es) to execute the service Sn configured as described by the service array SAn, for instance by using the functions of the control plane CP and/or the management plane MP.

Step 505 will be described in further detail by referring to the following example. Upon reception from the business plane BP of a first input I1 containing a SLA relating to the provision of a new failure management service S_{FM} with an agreed failure tolerance level, at step 505 the decision block DB preferably composes the failure management service S_{FM} as an aggregation of the following components:
- a first component C1 (also termed herein after "topology component") suitable for collecting information relating to the topology of the communication network CN from the network elements of the communication network CN. The topology information may be collected by a routing protocol, such as for instance OSPF (Open Shorted Path First);
- a second component C2 (also termed herein after "path finding component") which is suitable for calculating an optimum path, given the topology of the communication network CN, based on metrics associated to each network element and to each link between adjacent network elements, taking into account certain constraints, for achieving a certain objective, as it will be described in further detail herein after;
- a third component C3 (also termed herein after "path configuration component") which is suitable for being executed by the network manager NM, for calculating a path and for configuring the calculated path in the communication network CN. The path configuration may be carried out using a signaling protocol, such as for instance RSVP (Resource Reservation Protocol); and
- a fourth component C4 (also termed herein after "path setup component") which is suitable for setting up a path calculated either by the network manager NM or by the network element managers (for instance, the network element manager NEM1) of the communication network CN. The path set up may be carried out using a signaling protocol, such as for instance RSVP (Resource Reservation Protocol).

Four variants V21, V22, V23, V24 of the path finding component C2 are available in the communication network CN, and are accordingly listed in a variant array VA2 stored in the service database SDB. Each one of the four variants V21, V22, V23, V24 calculates the optimum path using any known algorithm (e.g. the Dijkstra algorithm). The four variants V21, V22, V23, V24 differ in the metrics they associate to each network element or link and/or in the constraints they take into account for performing the optimization and/or in the objective they pursue. In particular:
- variant V21: classic optimum path calculation. This variant may be used for calculating the working and protection paths when the network operator wishes to provide the failure management service S_{FM} based on 1 +1 protection, 1:1 protection or restoration. The metrics are the costs of the network elements and links and the objective is finding the path at minimum cost;
- variant V22: demand-wise path calculation. This variant may be used for calculating the protection paths when the network operator wishes to provide the failure management service S_{FM} based on the above mentioned DSP mechanism. The constraints may be possible SRGs (Shared Risk Groups) such as for instance SRLGs (Shared Risk Link Groups (s), SRNG (Shared Risk Node Group) or SRRG (Shared Risk Resource Group) and the objective is again finding the path at minimum cost;
- variant V23: probabilistic path calculation. This variant may be used for calculating the working paths when the network operator wishes to provide the failure management service S_{FM} based on the above mentioned FTPP mechanism. The metrics are the failure probabilities of the network elements and links and the objective is finding the path at minimum failure probability; and
- variant V24: energy path calculation. This variant may be used for calculating the working and protection paths when the network operator wishes to provide the failure management service S_{FM} based on the above mentioned ESP mechanism. The metrics are the power consumptions of the network elements and the objective is minimizing the power consumption of the communication network CN (e.g. by switching off certain resources).

Assuming that each one of the components C1, C3 and C4 has a single variant available in the communication network CN and that none of the components C1, C2, C3, C4 is optional, the failure management service S_{FM} may have four different configurations:
- Conf(1): the selected variant for the path finding component C2 is V21;
- Conf(2): the selected variant for the path finding component C2 is V22;
- Conf(3): the selected variant for the path finding component C2 is V23; and
- Conf(4): the selected variant for the path finding component C2 is V24.

Based on the failure tolerance level requested by the user, the decision block DB preferably selects the configuration by selecting the variant of the path finding component C2 which guarantees the requested service level, and accordingly generates a service array SA_{FM} which describes the selected configuration of the failure management service S_{FM}. The service array SA_{FM} comprises four indexes ind1, ind2, ind3, ind4. The index ind2, which corresponds to the path finding component C2, points to the variant array VA2. For instance, if the requested failure tolerance level is the maximum one, the decision block DB preferably selects the configuration Conf(1), and accordingly sets the index ind2 in the service array SA_{FM} to a value pointing to the element of the variant array VA2 containing the identifier of the variant V21.

Then, the decision block DB advantageously automatically composes new services fulfilling the user's requests and automatically deploys them in the communication network CN, without requiring any manual intervention by the network operator.

By referring again to the flow chart of Figure 5, if at step 504 the decision block DB determines that the received input(s) relate to the modification of an already deployed service Sn, the decision block DB preferably retrieves from the service database SDB the service array SAn which describes the current configuration Conf(j*) of the service Sn (step 507).

As a first example, the decision block DB may receive from the business plane BP through the first interface IF1 a first input I1 comprising a request of a given user for increasing the failure tolerance level of its traffic flows. In this case, at step 507 the decision block DB retrieves the service array describing the current configuration of the failure management service S_{FM} as deployed for that user.

As a second example, the decision block DB may receive from the business plane BP through the first interface IF1 a first input I1 comprising a request of the network operator of activating in the communication network CN a power consumption optimization policy. In this case, at step 507 the decision block DB retrieves the service arrays describing the current configuration of all the services (included the failure management services) comprising a path finding component, as deployed for all the users.

As a third example, the decision block DB may receive from the control plane CP through the third interface lF3 a third input I3 comprising a set of alarms indicating that one or more network elements are unavailable due to a failure. In this case, at step 507 the decision block DB retrieves the service arrays describing the current configurations of the failure management service S_{FM} as deployed for all the users whose reserved protection paths comprise the failed network element(s).

Then, the decision block DB preferably checks whether the current configuration Conf(j*) of the configurable service Sn as described by the service array SAn retrieved at step 507 is compliant with the received input(s) (step 508).

In the negative, the decision block DB preferably modifies the current configuration Conf(j*) of the service Sn into a new configuration Conf(j**) which complies with the received input(s) (step 509). To this purpose, the decision block DB may decide to remove one or more of the components C1, C2, ... Cm from the configuration and/or to add one or more of the components C1, C2, ... Cm to the configuration and/or to change the component variant for one or more of the components C1, C2, ... Cm. Step 509 comprises modifying the values of the indexes ind1, ind2 ... indm of the retrieved service array SAn. In particular, the removal of a component is preferably performed by setting the corresponding index to the value "null" in the service array SAn. The addition of a component is preferably performed by changing the value of the corresponding index from "null"" to a value pointing to an element of the corresponding variant array. The modification of a variant component is preferably performed by setting the value of the corresponding index from a first value pointing to a first element to a second value pointing to a second element of the corresponding variant array.

In an exemplary scenario, it is assumed that the failure management service S_{FM} for a given user is initially deployed with the above described configuration Conf(1), wherein the selected variant for the path finding component C2 is V21. This allows the network operator to provide the user with a maximum failure tolerance (i.e. a maximum service level) by applying e.g. a 1+1 protection mechanism. Subsequently, the network operator may decide to activate in the communication network CN a power consumption optimization policy. After finding a new agreement with the user (the originally agreed service level may not be guaranteed any more, but the user may enjoy of a price reduction for the service), the network operator formulates a request using a suitable programming language (e.g. XML) and provides it at the input of the service manager SM through the business plane interface IF1. When, at step 501, the decision block DB of the service manager SM receives from the business plane BP through the business plane interface IF1 a first input I1 comprising the request of the network operator, the decision block DB retrieves the service arrays describing the current configurations of the failure management services deployed for the various users. In particular, at step 507 it retrieves the service array SA_{FM} indicating the current configuration Conf(1) of the failure management service S_{FM} deployed for the above mentioned user. Then, at step 508, the decision block DB determines that the current configuration Conf(1) is not compliant with the input I1 coming from the business plane BP. Indeed, the 1+1 protection mechanism implemented by the failure management service S_{FM} deployed in its configuration Conf(1) does not optimize the power consumption of the communication network CN, at least because it permanently transmits the protected data over two non overlapping paths. Hence, in the absence of failure, the protection path is needlessly active and consumes power. Moreover, neither the working path nor the protection path is calculated taking into account the power consumption of the involved network resources. Then, at step 509, the decision block DB changes the current configuration Conf(1) of the failure management service S_{FM} into the above described configuration Conf(4), by changing from V21 to V24 (energy path calculation) the value of the index ind2 associated to the path finding component C2 in the service array SA_{FM}. Since the objective of the path finding component C2 is now minimizing the power consumption of the network, the service level initially agreed with the user is no more guaranteed.

Again, more than one of the available configurations Conf(j) of the service Sn may comply with the received input(s). In this case, the decision block DB may select the new configuration Conf(j**) amongst the configurations C(j) which comply with the received input(s) based on a predetermined criterion, such as for instance maximization of the resource usage efficiency, minimization of the OPEX, etc. Hence, the decision block DB selects the new configuration C(j**) of the service Sn which is most convenient for the network operator.

If, at step 508, the decision block DB determines that the current configuration Conf(j*) of the service Sn complies with the received input(s), it may nonetheless decide to modify the current configuration Conf(j*) of the service Sn into a new configuration Conf(j**), by changing the variant of one or more components (step 509).

This is the case, for instance, when a new component variant has been recently made available, which e.g. provides the same service level in a more efficient way (e.g. from the resource usage point of view). In this situation, the decision block DB may decide to modify the current configuration Conf(j*) of the service Sn by replacing the current component variant with the new component variant (i.e. by suitably changing the value of the corresponding index in the retrieved service array SAn). This operation is completely transparent to the user, who is not aware of the service configuration modification and still perceives the same service level.

After modifying the configuration of the service Sn by acting upon the index values of the retrieved service array SAn, the decision block DB preferably deploys the service Sn configured according to the new configuration Conf(j**) described by the modified service array SAn in the communication network CN (step 510). This step comprises first of all determining which network apparatus(es) of the communication network CN shall execute the re-configured service Sn. The re-configured service Sn shall not necessarily be executed by the same network apparatus(es) which executed the service Sn before its reconfiguration.

For instance, by referring again to the exemplary failure management service S_{FM}, when it is configured according to Conf(1), Conf(2) or Conf(3), it may be executed by the network elements which are involved in the transmission of the protected traffic flow (namely, the network elements of the working path or at least the source network element), or by the network element managers suitable to manage such network elements. However, if the configuration of the failure management service S_{FM} is changed into Conf(4), the service S_{FM} shall be implemented at the network element NM. Indeed, the variant V24 of the path finding component C2 needs to receive as input the power consumption measurements provided by all the network apparatuses of the communication network CN, because the objective of the optimization algorithm relates to the whole communication network CN (i.e. optimization of the power consumption of the whole communication network CN), not a single traffic flow.

At step 510, after determining the network apparatus(es) which shall execute the service Sn configured according to the new configuration C(j**), the decision block DB preferably operates the relevant network apparatus so that they start executing the service Sn configured according to the new configuration C(j**). To this purpose, the decision block DB preferably uses the functions of the management plane MP and/or the functions of the control plane CP.

The above steps 501-510 are continuously repeated by the decision block DB, which then configures new services at the service plane SP in the communication network CN and constantly updates their configurations in order to adapt them to possible inputs coming from the business plane BP, the service plane SP and the control plane CP. Both the configuration of new services and the update of their configurations are completely automatic operations and do not require any manual intervention by the network operator (except formulating its own requests at the business plane BP).

Hence, the creation and modification of service configuration is a very fast and simple operation, even when a high number of network apparatuses and/or services is involved. For instance, activating a power consumption optimization policy in the communication network CN in a known way would be an extremely complex operation, because it would require manually operating all the network elements and the network manager for passing from a failure management mechanism aiming to provide a given failure tolerance level to each single traffic flow to a failure management mechanism aiming to minimize the power consumption of the overall communication network. This means changing metrics, constraints and objectives of the optimization algorithm, and moreover passing from a distributed execution to a centralized execution of the optimization algorithm. According to embodiments of the present invention, the service manager SM may instead automatically perform such operation very easily and quickly, by simply selecting the proper value of the index ind2 corresponding to the path finding component C2 in the service array SA_{FM}.

The communication network CN may then react very quickly not only to requests of the network operator or users coming from the business plane BP, but also to events occurring in the communication network CN and notified by the services S1, S2 ... SN deployed at the service plane SP or by the functions of the control plane CP.

## Claims

1. A method for providing a service (Sn) to a user of a communication network (CN), the method comprising, at a service manager (SM) cooperating with at least one apparatus (NM, NEM1, NE1, NE2, NE3, NE4) of said communication network (CN):
- receiving an input (I1, I2, I3) from at least one of a business plane (BP), a service plane (SP) and a control plane (CP) of said communication network (CN), said input (I1, I2, I3) comprising at least one requirement which said service (Sn) shall fulfill; and
- providing said service (Sn) as an aggregation of a first number (m) of components (C1, C2, ...Cm), each component (C1, C2, ...Cm) comprising a software code portion suitable for performing an elementary task of an overall task of said service (Sn),
wherein said providing comprises selecting each component (C1, C2, ...Cm) from a respective predefined set comprising a second number (k(1), k(2), ... k(m)) of component variants, so as to configure said service (Sn) according to a configuration (Conf(j*)) which fulfills said requirement.

2. The method according to claim 1, wherein said component variants of said respective predefined set from which said each component (C1, C2, ...Cm) is selected are listed in a variant array (VA1, VA2, ... VAm) stored in a service database (SDB) cooperating with said service manager (SM).

3. The method according to claim 2, wherein said variant array (VA1, VA2, ... VAm) comprises a third number of first elements, said third number being equal to said second number (k(1), k(2), ... k(m)), each first element comprising an information indicative of a respective component variant.

4. The method according to claim 2 or 3, wherein said variant array (VA1, VA2, ... VAm) is automatically updated by adding a further first element when a further component variant of said component (C1, C2, ... Cm) becomes available in said communication network (CN).

5. The method according to any of claims 2 to 4, wherein providing said service (Sn) comprises providing a service array (SAn) describing said configuration (Conf(j*)), said service array (SAn) comprising a fourth number of second elements, said fourth number being equal to said first number (m), each second element of said service array (SAn) comprising an index (ind1, ind2, ... indm) pointing to one of said first elements in said variant array (VA1, VA2, ... VAm), thereby indicating the variant component selected for said component (C1, C2, ... Cm).

6. The method according to claim 5, wherein it further comprises storing said service array (SAn) in said service database (SDB) cooperating with said service manager (SM).

7. The method according to any of the preceding claims, wherein it further comprises deploying said service (Sn) configured according to said configuration (Conf(j*)) in said communication network (CN) by identifying at least one network element (NE1, NE2, NE3, NE4) of said communication network (CN) which shall execute said service (Sn) and by using at least one function of said control plane (CP) and/or said management plane (MP) for operating said at least one network element (NE1, NE2, NE3, NE4) so that it executes said service (Sn).

8. The method according to claim 7, further comprising receiving a further input (I1, I2, I3) from said business plane (BP) and/or from said service plane (SP) and/or from said control plane (CP) of said communication network (CN), said further input (I1, I2, I3) comprising at least one further requirement which said service (Sn) shall fulfill and, in response to said further input (I1, I2, I3):
- checking whether said service (Sn) configured according to said configuration (Conf(j*)) fulfills said further requirement and, in the negative,
- modifying said current configuration (Conf(j*)) into a modified configuration (Conf(j**)) which fulfills said further requirement; and
- deploying said service (Sn) configured according to said modified configuration (Conf(j**)) in said communication network (CN).

9. The method according to claim 8, wherein said modifying comprises one or more of the following operations:
- adding a further component to said service (Sn);
- removing at least one of said components (C1, C2, ... Cm) from said service (Sn); and
- changing component variant for at least one of said components (C1, C2, ... Cm).

10. The method according to claim 8 or 9, wherein.
- said checking comprises retrieving said service array (SAn) from said service database (SDB) and reading values of said second elements of said retrieved service array (SAn); and
- said modifying comprises changing value of at least one of said second elements of said retrieved service array (SAn).

11. The method according to any of the preceding claims, wherein said service manager (SM) is executed in a centralized way by an apparatus (NM, NEM1) of said communication network (CN).

12. The method according to any of the preceding claims, wherein said service manager (SM) is executed in a distributed way by a cluster comprising at least one management apparatus (NM, NEM1) and/or at least one network element (NE1, NE2, NE3, NE4) of said communication network (CN).

13. An apparatus (NM, NEM1, NE1, NE2, NE3, NE4) for a communication network (CN) configured to perform the method according to any of claims 1 to 24.

14. A communication network (CN) configured to perform the method according to any of claims 1 to 24.

15. A computer program product comprising computer executable instructions for performing, when said computer program product is run on an apparatus (NM, NEM1, NE1, NE2, NE3, NE4) of a communication network (CN), the method according to any of claim 1 to 13.

## Amended claims

### Amended claims in accordance with Rule 137(2) EPC.

**1.** A method for providing a service (Sn) to a user of a communication network (CN), the method comprising, at a service manager (SM) cooperating with at least one apparatus (NM, NEM1, NE1, NE2, NE3, NE4) of said communication network (CN):
- receiving an input (I1, I2, I3) from at least one of a business plane (BP), a service plane (SP) and a control plane (CP) of said communication network (CN), said input (I1, I2, I3) comprising at least one requirement which said service (Sn) shall fulfill; and
- providing said service (Sn) as an aggregation of a first number (m) of components (C1, C2, ... Cm), each component (C1, C2, ... Cm) comprising a software code portion suitable for performing an elementary task of an overall task of said service (Sn),
wherein said providing comprises selecting each component (C1, C2, ...Cm) from a respective predefined set comprising a second number (k(1), k(2), ... k(m)) of component variants, so as to configure said service (Sn) according to a configuration (Conf(j*)) which fulfills said requirement.

**2.** The method according to claim 1, wherein said component variants of said respective predefined set from which said each component (C1, C2, ...Cm) is selected are listed in a variant array (VA1, VA2, ... VAm) stored in a service database (SDB) cooperating with said service manager (SM).

**3.** The method according to claim 2, wherein said variant array (VA1, VA2, ... VAm) comprises a third number of first elements, said third number being equal to said second number (k(1), k(2), ... k(m)), each first element comprising an information indicative of a respective component variant.

**4.** The method according to claim 2 or 3, wherein said variant array (VA1, VA2, ... VAm) is automatically updated by adding a further first element when a further component variant of said component (C1, C2, ... Cm) becomes available in said communication network (CN).

**5.** The method according to any of claims 3 or 4, wherein providing said service (Sn) comprises providing a service array (SAn) describing said configuration (Conf(j*)), said service array (SAn) comprising a fourth number of second elements, said fourth number being equal to said first number (m), each second element of said service array (SAn) comprising an index (ind1, ind2, ... indm) pointing to one of said first elements in said variant array (VA1, VA2, ... VAm), thereby indicating the variant component selected for said component (C1, C2, ... Cm).

**6.** The method according to claim 5, wherein it further comprises storing said service array (SAn) in said service database (SDB) cooperating with said service manager (SM).

**7.** The method according to any of the preceding claims, wherein it further comprises deploying said service (Sn) configured according to said configuration (Conf(j*)) in said communication network (CN) by identifying at least one network element (NE1, NE2, NE3, NE4) of said communication network (CN) which shall execute said service (Sn) and by using at least one function of said control plane (CP) and/or said management plane (MP) for operating said at least one network element (NE1, NE2, NE3, NE4) so that it executes said service (Sn).

**8.** The method according to claim 7, further comprising receiving a further input (I1, I2, I3) from said business plane (BP) and/or from said service plane (SP) and/or from said control plane (CP) of said communication network (CN), said further input (I1, I2, I3) comprising at least one further requirement which said service (Sn) shall fulfill and, in response to said further input (I1, I2, I3):
- checking whether said service (Sn) configured according to said configuration (Conf(j*)) fulfills said further requirement and, in the negative,
- modifying said current configuration (Conf(j*)) into a modified configuration (Conf(j**)) which fulfills said further requirement; and
- deploying said service (Sn) configured according to said modified configuration (Conf(j**)) in said communication network (CN).

**9.** The method according to claim 8, wherein said modifying comprises one or more of the following operations:
- adding a further component to said service (Sn);
- removing at least one of said components (C1, C2, ... Cm) from said service (Sn); and
- changing component variant for at least one of said components (C1, C2, ... Cm).

**10.** The method according to claim 8 or 9, wherein.
- said checking comprises retrieving said service array (SAn) from said service database (SDB) and reading values of said second elements of said retrieved service array (SAn); and
- said modifying comprises changing value of at least one of said second elements of said retrieved service array (SAn).

**11.** The method according to any of the preceding claims, wherein said service manager (SM) is executed in a centralized way by an apparatus (NM, NEM1) of said communication network (CN).

**12.** The method according to any of the preceding claims, wherein said service manager (SM) is executed in a distributed way by a cluster comprising at least one management apparatus (NM, NEM1) and/or at least one network element (NE1, NE2, NE3, NE4) of said communication network (CN).

**13.** An apparatus (NM, NEM1, NE1, NE2, NE3, NE4) for a communication network (CN) configured to perform the method according to any of claims 1 to 12.

**14.** A communication network (CN) configured to perform the method according to any of claims 1 to 12.

**15.** A computer program product comprising computer executable instructions for performing, when said computer program product is run on an apparatus (NM, NEM1, NE1, NE2, NE3, NE4) of a communication network (CN), the method according to any of claim 1 to 12.
